# EUROPÄISCHE PATENTSCHRIFT

(11) **EP 4 094 843 B1**
(45) Veröffentlichungstag und Bekanntmachung des Hinweises auf die Patenterteilung: **04.12.2024**
(21) Anmeldenummer: 22168171.1
(22) Anmeldetag: 13.04.2022
(51) Int. Cl.: B05B 7/16

(54) **SCHLAUCHANORDNUNG UND DRUCKGASAUFBEREITUNGSANLAGE FÜR SCHLAUCHANORDNUNG**
HOSE ASSEMBLY AND PRESSURIZED GAS DELIVERY SYSTEM FOR HOSE ASSEMBLY
ENSEMBLE TUYAU ET INSTALLATION DE TRAITEMENT DU GAZ COMPRIMÉ POUR L'ENSEMBLE TUYAU

(30) Priorität: 20.04.2021 DE 102021109935
(43) Veröffentlichungstag der Anmeldung: 30.11.2022
(73) Patentinhaber: Copps GmbH, 47906 Kempen (DE)
(72) Erfinder:
(74) Vertreter: DREISS Patentanwälte PartG mbB

(56) Entgegenhaltungen:
- WO-A1-2004/108300
- DE-U1- 202021 103 388

## Beschreibung

Die Erfindung betrifft eine Schlauchanordnung gemäß dem Oberbegriff von Anspruch 1. Zudem betrifft die Erfindung eine Druckgasaufbereitungsanlage gemäß dem Oberbegriff des nebengeordneten Anspruchs.

Schlauchanordnungen der eingangs genannten Art sind aus dem Stand der Technik bekannt, bspw. in Form von im Handel erhältlichen und über eine Druckgasleitung verfügenden Schlauchanordnungen ("Druckluftschläuche"). Derartige Schlauchanordnungen können durch Druckgasaufbereitungsanlagen zur Bereitstellung von aufbereitetem Druckgas gespeist werden. Eine solche Druckgasaufbereitungsanlage ist bspw. aus DE 10 2018 118 206 A1 bekannt, in der das Druckgas vor seiner Bereitstellung befeuchtet wird. Hiermit lässt sich, insbesondere bei idealen Bedingungen, ein verbessertes Sprühergebnis erzielen. So kann ein Druckgas durch Befeuchtung aufbereitet und mittels der Schlauchanordnung zum Entnahmeort geführt werden, jedoch unterliegt das in der Druckgasleitung geführte Druckgas dem Einfluss von Umgebungsbedingungen (Luftdruck und Temperatur). Dadurch kann es zu unerwünschtem Erwärmen oder Abkühlen von Druckgasleitung und Druckgas kommen, so dass das befeuchtete Druckgas in der Druckgasleitung kondensieren kann. Hieraus ergibt sich die Gefahr der Tropfenbildung. Lösungsansätze mit elektrischen Heizspiralen eignen sich nur für spezielle Anwendungen, wobei eine Verwendung in explosionsgeschützten Bereichen ("Ex-Schutz-Bereich") problematisch und ggf. überhaupt nicht möglich ist. Insofern besteht Optimierungsbedarf.

Eine Vorrichtung zur Temperierung einer Gasleitung ist aus Dokument WO2004/108300 A1 bekannt.

Der Erfindung liegt die Aufgabe zugrunde, mit einfachen konstruktiven Mitteln eine Bereitstellung von Druckgas mit hoher und gleichbleibender Qualität zu ermöglichen. Es ist wünschenswert, dass Kondensation sowie Tropfenbildung von befeuchtetem Druckgas vermieden werden kann.

Die Erfindung löst diese Aufgabe durch eine Schlauchanordnung mit den Merkmalen des Anspruchs 1.

Die Schlauchanordnung dient zur Zuleitung von Druckgas zu einer Sprühvorrichtung, insbesondere von Lackiergas (Lackiergas-Zuleitungsanordnung). Die Schlauchanordnung weist eine sich von einem anschlussseitigen Ende zu einem freien Ende erstreckende Druckgasleitung (Lackiergasleitung) auf, wobei eine Fluidleitung zur Temperierung (bspw. Beheizung) der Druckgasleitung vorgesehen ist. Die Fluidleitung ist in der Druckgasleitung angeordnet und erstreckt sich entlang der Druckgasleitung. Die Fluidleitung weist einen sich vom anschlussseitigen Ende zum freien Ende erstreckenden Vorlaufabschnitt auf, der am freien Ende in einen Rücklaufabschnitt übergeht, wobei sich der Rücklaufabschnitt vom freien Ende zum anschlussseitigen Ende erstreckt.

Somit lässt sich an einer Schlauchanordnung mit einfachen konstruktiven Mitteln eine Temperierung realisieren, indem eine Fluidleitung vorgesehen ist, die in der Druckgasleitung angeordnet ist und, bspw. durch Speisung mit beheizter Flüssigkeit (z.B. beheiztem Wasser), zur Temperierung der Druckgasleitung bzw. von darin enthaltenem Druckgas dient. Somit kann eine flüssigkeitsbasierte Schlauchheizung realisiert werden. Daher kann bei feuchtem oder befeuchtetem Druckgas Kondensation in der Druckgasleitung vermieden werden. Bei Bereitstellung von Druckgas an einer Vorrichtung kann ein hochwertiges Sprühergebnis erzielt werden.

Am anschlussseitigen Ende der Schlauchanordnung können sich ein Anschlusselement der Druckgasleitung und optional beide Anschlüsse der Fluidleitung (Vorlauf- und Rücklaufanschlusselement) befinden. Das anschlussseitige Ende kann einer Druckgasaufbereitungsanlage zugewandt bzw. an diese angeschlossen sein. Mit anderen Worten kann stromaufwärts des anschlussseitigen Endes der Schlauchanordnung eine Druckgasaufbereitungsanlage angeordnet sein.

Am freien Ende der Schlauchanordnung kann sich ein weiteres Anschlusselement der Druckgasleitung befinden. Stromabwärts des freien Endes kann eine Sprühvorrichtung (Abnehmer) an das Anschlusselement angeschlossen sein. Bei der Sprühvorrichtung kann es sich um eine Beschichtungsanlage oder eine Beschichtungspistole handeln. Unabhängig können die Anschlusselemente einen Schraubanschluss, einen Kupplungsstecker oder eine Kupplung aufweisen oder als solche Elemente ausgebildet sein.

Vorzugsweise kann die Fluidleitung am Übergang vom Vorlaufabschnitt zum Rücklaufabschnitt bogenförmig, insbesondere U-förmig, gekrümmt sein und ein Halteelement (bspw. einen Fixierdorn) umschlingen, welches den Übergang der Fluidleitung am freien Ende sichert, insbesondere gegen eine Bewegung zum anschlussseitigen Ende hin. Damit ist der Übergang auf einfache Weise am anschlussseitigen Ende gesichert. Der am Übergang bogenförmig gekrümmte Abschnitt der Fluidleitung kann einen Winkel von 180° oder mehr aufweisen. Das Halteelement kann zum freien Ende hin einen abgerundeten, insbesondere halbkreisförmig abgerundeten, Abschnitt aufweisen, der der Fluidleitung am Übergang die Krümmung vorgibt. Das Halteelement kann zum anschlussseitigen Ende in einen sich verjüngenden, insbesondere spitz zulaufenden, Abschnitt aufweisen, der den Vorlaufabschnitt und den Rücklaufabschnitt der Fluidleitung in diesem Bereich näher zueinander führt. Der Krümmungsradius am Übergang kann ein gleich großes oder größeres Maß aufweisen als der mittlere Abstand der Mittellängsachsen von Vorlaufabschnitt und Rücklaufabschnitt der Fluidleitung zwischen dem freien und dem anschlussseitigen Ende, bspw. in einem Druckschlauch der Druckgasleitung.

Wie bereits angedeutet, kann die Druckgasleitung am freien Ende ein Anschlusselement zum Anschluss einer Sprühvorrichtung aufweisen, um diese mit (aufbereitetem) Druckgas bzw. Lackiergas zu versorgen. Der Übergang der Fluidleitung vom Vorlaufabschnitt zum Rücklaufabschnitt kann zumindest großenteils, vorzugweise vollständig, im Anschlusselement angeordnet sein. Somit kann eine Temperierung der Druckgasleitung mittels der Fluidleitung nahezu über die gesamte Länge der Schlauchanordnung erfolgen, insbesondere auch dort, wo die Gefahr einer Kondensation am größten ist, nämlich an dem am freien Ende befindlichen Anschlusselement.

In vorteilhafter Weise kann die Druckgasleitung am anschlussseitigen Ende ein weiteres Anschlusselement zum Anschluss an einen Ausgang einer Druckgasaufbereitungsanlage (Bereitstellung von Druckgas) aufweisen und die Fluidleitung kann am anschlussseitigen Ende jeweils ein Vorlaufanschlusselement und ein Rücklaufanschlusselement zum Anschluss an eine Heizeinrichtung der Druckgasaufbereitungsanlage aufweisen, wobei das weitere Anschlusselement, das Vorlaufanschlusselement und das Rücklaufanschlusselement nebeneinander angeordnet und am anschlussseitigen Ende stirnseitig aus der Schlauchanordnung herausgeführt sind. Dies führt zu einer vergleichsweise kompakten Ausgestaltung des anschlussseitigen Endes, die zudem eine Temperierung der Druckgasleitung mittels der Fluidleitung am anschlussseitigen Ende begünstigt. Das Vorlaufanschlusselement ist mit dem Vorlaufabschnitt der Fluidleitung verbunden bzw. strömungsverbunden. Das Vorlaufanschlusselement ist zum Anschluss an einen Vorlaufanschluss einer Druckgasaufbereitungsanlage eingerichtet und/oder bestimmt. Das Rücklaufanschlusselement ist mit dem Rücklaufabschnitt der Fluidleitung verbunden bzw. strömungsverbunden. Das Rücklaufanschlusselement ist zum Anschluss an einen Rücklaufanschluss einer Druckgasaufbereitungsanlage eingerichtet und/oder bestimmt.

Im Rahmen einer bevorzugten Ausgestaltung kann am anschlussseitigen Ende ein Anschlussstück vorgesehen sein, welches eine Stirnwand aufweist, wobei das weitere Anschlusselement, das Vorlaufanschlusselement und das Rücklaufanschlusselement nebeneinander, insbesondere parallel zueinander, durch die Stirnwand hindurch geführt und/oder an der Stirnwand befestigt sind. Dies begünstigt eine stabile und kompakte Ausgestaltung der Schlauchanordnung am anschlussseitigen Ende. Das, bspw. metallisch ausgebildete, Anschlussstück kann optional eine Isolation aufweisen, z.B. eine Isolationsschicht auf der Innenseite und/oder der Außenseite.

In zweckmäßiger Weise kann das Anschlussstück eine umlaufende, sich entlang der Längsrichtung des Anschlussstücks erstreckende Wandung aufweisen, die einen Innenraum begrenzt und einen Teil (axialer Abschnitt) der Druckgasleitung definiert. Hiermit kann auf konstruktiv günstige Weise eine Adaption des anschlussseitigen Endes und des weiteren Verlaufs der Schlauchanordnung erfolgen, wobei im Anschlussstück keine separate Druckgasleitung hindurchgeführt werden muss. Dies begünstigt eine kompakte Ausgestaltung des Anschlussstücks.

Vorzugsweise kann das Anschlussstück seinen Querschnitt in Richtung des freien Endes axial abschnittsweise verjüngen. Dies erleichtert eine Anordnung bzw. einen Anschluss der Anschlusselemente am anschlussseitigen Ende, wobei sich die Schlauchanordnung im weiteren Verlauf verjüngt, was Kompaktheit und Handhabung begünstigt. Das Anschlussstück kann drei axiale Abschnitte aufweisen: Einen an die Stirnwand angrenzenden Abschnitt mit einem ersten Außendurchmesser, den sich verjüngenden Abschnitt und einen weiteren Abschnitt mit einem zweiten Außendurchmesser, wobei der zweite Außendurchmesser kleiner als der erste Außendurchmesser ist. An den weiteren Abschnitt des Anschlussstücks kann ein Druckschlauch angeschlossen, bspw. aufgeschoben oder aufgepresst sein.

In vorteilhafter Weise kann die Druckgasleitung einen Druckschlauch aufweisen, der das (anschlussseitige) Anschlussstück mit dem Anschlusselement am freien Ende der Schlauchanordnung verbindet. Dies trägt zu einer leichten, flexiblen und einfach handzuhabenden Ausgestaltung der Schlauchanordnung bei. Der (das Druckgas führende) Druckschlauch kann jeweils an buchsenförmige Anschlussabschnitte am Anschlussstück (weiterer Abschnitt, s.o.) und am Anschlusselement angeschlossen, bspw. aufgeschoben und/oder aufgepresst sein.

In zweckmäßiger Weise kann eine Druckbegrenzungseinrichtung vorgesehen sein, die den Druck in der Druckgasleitung auf einen definierten Maximaldruck begrenzt. Dies trägt zur Sicherheit in der Anwendung der Schlauchanordnung bei. Die Druckbegrenzungseinrichtung kann als Sollbruchstelle oder als Überdruckventil ausgebildet sein. Der definierte Maximaldruck kann bspw. 15 bar betragen.

In der Druckgasleitung der Schlauchanordnung kann ein Temperatur- und/oder Feuchtigkeitssensor angeordnet sein, der drahtlos oder drahtgebunden mit der Steuerung der Druckgasaufbereitungsanlage verbunden ist. Dadurch können Temperatur und/oder Feuchtigkeit direkt im Schlauch erfasst und drahtlos oder drahtgebunden bspw. an eine Steuerung einer Versorgungseinheit übertragen werden. Da das Risiko von Kondensation mit der Leitungslänge ansteigt, ist es von Vorteil, wenn der Temperatur- und/oder Feuchtigkeitssensor im vorderen (am freien Ende befindlichen) Drittel der Druckgasleitung bzw. der Schlauchanordnung angeordnet ist.

In der Druckgasleitung der Schlauchanordnung kann ein Tropfenabscheider angeordnet sein. Hiermit kann eine an sich unerwünschte Abgabe von Flüssigkeitstropfen verhindert werden, indem diese im Tropfenabscheider aufgefangen werden. Es ist von Vorteil, den Tropfenabscheider möglichst im vorderen (am freien Ende befindlichen) Drittel der Druckgasleitung anzuordnen. Aus Handhabungsgründen ist es bevorzugt, den Tropfenabscheider ca. 60 bis 100 Zentimeter beabstandet vom freien Ende der Druckgasleitung anzuordnen. Optional kann der Tropfenabscheider zur Sichtkontrolle ein Sichtfenster aufweisen.

Die eingangs genannte Aufgabe wird auch durch eine Druckgasaufbereitungsanlage zur Bereitstellung von aufbereitetem Druckgas an eine Schlauchanordnung mit den Merkmalen des nebengeordneten Anspruchs gelöst.

Die Druckgasaufbereitungsanlage dient zur Bereitstellung von aufbereitetem Druckgas an eine eine Druckgasleitung und eine Fluidleitung umfassende Schlauchanordnung, insbesondere eine Schlauchanordnung mit einem oder mehreren der voranstehenden beschriebenen Aspekte. Die Druckgasaufbereitungsanlage weist einen Eingang zum Anschluss einer (intern oder extern relativ zur Druckgasaufbereitungsanlage angeordneten) Druckgasquelle und einen Ausgang zur Bereitstellung des aufbereiteten Druckgases auf. Der Eingang und der Ausgang sind miteinander strömungsverbunden und in der Strömungsverbindung ist eine Befeuchtungseinrichtung zur Befeuchtung des Druckgases angeordnet. Die Druckgasaufbereitungsanlage weist eine Heizeinrichtung zur Beheizung einer Flüssigkeit auf, wobei die Heizeinrichtung einen Vorlaufanschluss zur Abgabe beheizter Flüssigkeit an einen Vorlaufabschnitt der Fluidleitung und einen Rücklaufanschluss zur Einspeisung rückgeführter Flüssigkeit von einem Rücklaufabschnitt der Fluidleitung aufweist.

Somit kann neben einer Bereitstellung von Druckgas eine erwärmte Flüssigkeit bereitgestellt werden, die zur Temperierung des Druckgases eingesetzt werden kann. Es kann eine Schlauchanordnung mit einer Druckgasleitung und einer Fluidleitung zur Temperierung des Druckgases an die Druckgasaufbereitungsanlage angeschlossen werden (Schlauchheizung), insbesondere eine Schlauchanordnung wie oben beschrieben. Somit ist eine flüssigkeitsbasierte Schlauchheizung geschaffen. Das Risiko von Kondensation und Tropfenbildung der Druckgasleitung ist somit erheblich reduziert. Es lässt sich ein hinreichender Explosionsschutz erzielen. Durch die hohe und gleichbleibende Qualität des Druckgases können bessere Sprühergebnisse erreicht werden, bspw. eine bessere Beschichtung oder Lackierung.

In vorteilhafter Weise kann die Druckgasaufbereitungsanlage ein oder mehrere Reservoire für ein Einspritzfluid aufweisen, wobei das oder die Reservoire jeweils mittels einer Einspritzleitung mit der Befeuchtungseinrichtung verbunden sind, so dass die Befeuchtungseinrichtung mit Einspritzfluid gespeist werden kann. Somit kann die Befeuchtungseinrichtung unabhängig von einer externen Fluidversorgung durch das oder die Reservoire mit Einspritzfluid gespeist werden. Das oder die Reservoire können zur Versorgung der Befeuchtungseinrichtung mit Einspritzfluid unter Druck stehen, bspw. durch eine jeweils am Reservoir vorgesehene Pumpe oder durch eine jeweilige Strömungsverbindung zwischen Reservoir und Eingang bzw. einer am Eingang angeschlossenen Druckgasquelle, bspw. einem Druckgastank oder einem Kompressor. Hiermit kann der Innenraum des Reservoirs jeweils mit Druck (Überdruck von bspw. 0,5 bar) beaufschlagt werden. Bei dem oder den Reservoiren handelt es sich jeweils insbesondere um Flüssigkeitsreservoire.

Im Rahmen einer bevorzugten Ausgestaltung kann die Druckgasaufbereitungsanlage derart eingerichtet sein, dass dann, wenn am Ausgang kein Druckgas entnommen wird, die Zufuhr von Einspritzfluid zur Befeuchtungseinrichtung gestoppt wird.

Hiermit wird einer zu hohen Befeuchtung des Druckgases entgegengewirkt. So reduziert sich das Risiko von Kondensation und Tropfenbildung stromabwärts der Befeuchtungseinheit. Die Druckgasaufbereitungsanlage kann derart eingerichtet sein, dass wenn am Ausgang (Druckgasanschluss) Druckgas entnommen wird, die Flüssigkeitszufuhr zur Befeuchtungseinrichtung aktiviert wird.

Vorzugsweise können dann, wenn die Druckgasaufbereitungsanlage mehrere Reservoire aufweist, in den Reservoiren jeweils unterschiedliche Einspritzfluide enthalten sein. Dadurch kann das Druckgas nicht nur befeuchtet, sondern bspw. durch Zugabe entsprechender Additive weiter aufbereitet werden. In einem Reservoir kann als ein erstes Einspritzfluid bspw. Wasser, insbesondere demineralisiertes Wasser, und in einem weiteren Reservoir kann als ein weiteres Einspritzfluid eine Flüssigkeit mit antistatischer Wirkung enthalten sein.

Vorzugsweise kann zwischen dem oder den Reservoiren und der Befeuchtungseinrichtung ein Frequenzgenerator angeordnet sein, welchen die Einspritzleitung oder die Einspritzleitungen jeweils zur Anregung des Einspritzfluids (mittels einer oder mehrerer Frequenzen) passieren. Dadurch kann das Spritzverhalten des aufbereiteten Druckgases optimiert werden. Der Frequenzgenerator ist insbesondere derart eingerichtet, dass keine Anregung (Frequenzgenerator deaktiviert), eine gezielte Anregung von nur einer Einspritzleitung bzw. einem Einspritzfluid (Frequenzgenerator nur an einer Einspritzleitung aktiviert) und/oder eine Anregung beider bzw. mehrerer Einspritzleitungen bzw. Einspritzfluide (Frequenzgenerator vollständig aktiviert) erfolgen kann.

In zweckmäßiger Weise können die Einspritzleitung oder die Einspritzleitungen jeweils eine oder mehrere Einspritzdüsen aufweisen, mittels denen die Einspritzleitungen jeweils in die Befeuchtungseinrichtung münden, wobei an den Einspritzdüsen jeweils eine Düsenrückspüleinrichtung zur, insbesondere permanenten, Reinigung der Einspritzdüse vorgesehen ist. Dies reduziert das Risiko von Verunreinigungen und Tropfenbildung.

Im Konkreten kann die Düsenrückspüleinrichtung jeweils eine Rückspülleitung zur Rückführung von überschüssigem Einspritzfluid zum jeweiligen Reservoir für Einspritzfluid aufweisen. Dadurch ist eine konstruktiv einfache Rückführung des Einspritzfluids möglich.

In vorteilhafter Weise können in der oder den Einspritzleitungen jeweils eine Durchflussmesseinrichtung zur Erfassung der Durchflussmenge des Einspritzfluids eingebunden sein. Dadurch lässt sich die Menge des Einspritzfluids präzise erfassen und ggf. feinabstimmen. Die Durchflussmesseinrichtung kann eine Messsensorik aufweisen, die die erfassen Werte an eine hierfür vorgesehene Anzeige, bspw. ein Display, ausgibt. Alternativ oder ergänzend kann die Messsensorik drahtlos oder drahtgebunden mit einer Steuerung der Druckgasaufbereitungsanlage gekoppelt sein, um die erfassten Werte an die Steuerung auszugeben.

In zweckmäßiger Weise kann in der oder den Einspritzleitungen jeweils ein Ventil angeordnet sein, sein, bspw. ein Proportionalventil, mittels dem die Zufuhr des Einspritzfluids regelbar ist. Hiermit wird die Regelung der Flüssigkeitszufuhr umgesetzt. Das Ventil weist vorzugsweise einen elektrisch oder elektronisch ansteuerbaren Aktor auf, mittels dem das Ventil betätigbar ist. Das Ventil oder der Aktor kann mittels einer drahtlosen oder drahtgebundenen Verbindung mit einer Steuerung der Druckgasaufbereitungsanlage verbunden sein. Somit kann eine Ansteuerung des Ventils (Betätigung des Aktors) in Abhängigkeit von an der Durchflussmesseinrichtung ermittelten Durchflussmenge oder in Abhängigkeit von einer an einem Durchflussschalter ermittelten Strömung erfolgen, wobei der Durchflussschalter in der Strömungsverbindung zwischen Eingang und Ausgang der Befeuchtungseinrichtung vorgeschaltet ist.

In vorteilhafter Weise kann in die Strömungsverbindung zwischen der Befeuchtungseinrichtung und dem Ausgang eine Kondensatfangeinrichtung eingebunden sein. Hiermit kann überschüssiges Einspritzfluid aufgefangen werden, und zwar noch bevor das befeuchtete Druckgas den Ausgang erreicht. Dies kann einen Tropfenfänger in der Schlauchanordnung entlasten oder sogar überflüssig machen.

In zweckmäßiger Weise kann die Heizeinrichtung eine mit dem Vorlaufanschluss strömungsverbundene Vorlaufleitung aufweisen, wobei in die Vorlaufleitung ein Heizelement zur Beheizung der Flüssigkeit (Flüssigkeit zur Beheizung der Fluidleitung der Schlauchanordnung) eingebunden ist. Durch das Heizelement kann eine Erwärmung des Trägermediums (Flüssigkeit, bspw. Wasser) erfolgen bevor dieses über den Vorlaufanschluss an die Fluidleitung ausgegeben wird. Das Heizelement kann als elektrisches Heizelement, Wärmepumpenheizung, Holzheizung (Hackschnitzel oder Pellets) oder Solarheizung ausgebildet sein. Unabhängig davon kann in der Vorlaufleitung eine Pumpe zur Förderung der Flüssigkeit und/oder ein Druckausgleichselement vorgesehen sein. Die Pumpe dient zum Antrieb bzw. der Zirkulation des Trägermediums. Durch das Druckausgleichselement kann ein Druckausgleich erfolgen.

Im Rahmen einer bevorzugten Ausgestaltung kann die Heizeinrichtung eine mit dem Rücklaufanschluss strömungsverbundene Rücklaufleitung aufweisen, wobei in die Rücklaufleitung ein Wärmetauscher zur Aufnahme von Wärmeenergie von in der Rücklaufleitung geführter Flüssigkeit eingebunden ist. Dadurch kann der über den Rücklaufanschluss rückgeführten Flüssigkeit Wärmeenergie entnommen und bspw. an eine der Befeuchtungseinrichtung in der Strömungsverbindung vorgeschaltete Heizung und/oder an die in die Vorlaufleitung eingebundene Heizeinrichtung abgegeben werden. Dies trägt zu einem umweltfreundlichen Betrieb bei. Unabhängig davon kann in der Rücklaufleitung eine Pumpe zur Förderung der Flüssigkeit vorgesehen sein.

Vorzugsweise können der Wärmetauscher und das Heizelement thermisch derart miteinander gekoppelt sein, dass durch den Wärmetauscher aufgenommene Wärmeenergie an das Heizelement an der Vorlaufleitung abgegeben werden kann. Dies trägt weiter zu einem umweltfreundlichen Betrieb bei.

Im Konkreten kann die Vorlaufleitung mit einer Fluidquelle zur Zuführung von Flüssigkeit strömungsverbunden sein. Dadurch kann der Vorlaufleitung neue Flüssigkeit zugeführt werden.

Alternativ oder ergänzend kann die Rücklaufleitung mit einer Fluidsenke zur Abführung von Flüssigkeit strömungsverbunden sein. Dadurch kann verwendete oder verbrauchte Flüssigkeit von der Rücklaufleitung abgeführt werden.

Alternativ oder ergänzend können die Vorlaufleitung und die Rücklaufleitung miteinander strömungsverbunden sein.

Dadurch kann an der Rücklaufleitung rückgeführte Flüssigkeit, die möglicherweise Restwärme enthält, der Vorlaufleitung zugeführt und, bspw. nach Durchlaufen des Heizelements, erneut am Vorlaufanschluss bereitgestellt werden. Ist die Fluidleitung der Schlauchanordnung mit ihrem Vorlaufabschnitt und ihrem Rücklaufabschnitt jeweils an den Vorlaufanschluss und an den Rücklaufanschluss angeschlossen, bilden die Vorlaufleitung, die Fluidleitung und die Rücklaufleitung einen Heizkreislauf, den die Flüssigkeit durchlaufen kann. Sind die Rücklaufleitung und die Vorlaufleitung mit einander strömungsverbunden, kann ein Wärmetauscher an der Rücklaufleitung entfallen.

In zweckmäßiger Weise kann eine Steuerung für die Druckgasaufbereitungsanlage vorgesehen sein. Hiermit ist eine Steuerung, Regelung und/oder Überwachung der Druckgasaufbereitungsanlage ermöglicht. In der Druckgasaufbereitungsanlage enthaltene Schalter, Sensoren und/oder Aktoren können mit der Steuerung drahtlos (Funk, WLAN oder Bluetooth) oder drahtgebunden (elektrisch oder elektronische Verbindung) verbunden sein.

In vorteilhafter Weise können der Vorlaufanschluss, der Rücklaufanschluss und der Ausgang in einem gemeinsamen (ausgangsseitigen) Anschlussbereich der Druckgasaufbereitungsanlage benachbart zueinander angeordnet sein. Dadurch kann die Handhabung erleichtert werden, da ein Anschlussterminal geschaffen ist.

In der Strömungsverbindung zwischen Eingang und Ausgang kann ein Durchflussschalter angeordnet sein, der ermittelt, ob am Ausgang Druckgas entnommen wird. Der Durchflussschalter kann der Befeuchtungseinrichtung vorgeschaltet sein. Er kann eine Strömung im Abschnitt der Strömungsverbindung zwischen Eingang und Befeuchtungseinrichtung erfassen (Trockengasleitung). Der Durchflussschalter kann über eine drahtlose oder drahtgebundene Verbindung mit der Steuerung der Druckgasaufbereitungsanlage verbunden sein.

Es kann ein Temperatur- und/oder Feuchtigkeitssensor vorgesehen sein, der außerhalb der Druckaufbereitungsanlage, insbesondere außerhalb des Gehäuses der Druckgasaufbereitungsanlage, angeordnet und drahtlos oder drahtgebunden mit der Steuerung der Druckaufbereitungsanlage verbunden ist. Mittels dieses Sensors kann die außerhalb der Druckaufbereitungsanlage herrschende Temperatur und/oder Feuchtigkeit gemessen und als Signal an die Steuerung übermittelt werden. Neben der Witterung kann so auch die Jahreszeit berücksichtigt werden. Der Sensor kann drahtlos oder drahtgebunden mit der Steuerung verbunden sein. Die Steuerung kann derart eingerichtet sein, dass die vom Sensor erfassten Signale ("atmosphärische Situation") als Regelgröße eingesetzt wird.

Bei der an den Eingang der Druckgasaufbereitungsanlage anschließbaren oder angeschlossenen Druckgasquelle kann es sich um eine Druckgasversorgung (bspw. Druckgastank) oder einen Kompressor handeln. Dem Eingang (eingangsseitiger Anschluss) der Strömungsverbindung kann eine Filtereinheit und/oder ein Druckregler, insbesondere ein manueller Druckregler, vorgeschaltet sein.

An den Eingang (eingangsseitiger Anschluss) der Strömungsverbindung kann zudem ein eingangsseitiger Drucksensor angeschlossen sein, der den Eingangsdruck der Druckgasaufbereitungsanlage erfasst. Der Drucksensor kann zur Weitergabe des Eingangsdrucks an eine Steuerung der Druckgasanlage drahtlos oder drahtgebunden mit der Steuerung gekoppelt sein.

Zwischen dem Eingang (eingangsseitiger Anschluss) der Strömungsverbindung und der Befeuchtungseinrichtung kann eine Abzweigung vorgesehen sein, an der sich die Strömungsverbindung in einen ersten Leitungszweig (Trockengasleitung) und einen zweiten Leitungszweig (Befeuchtungsleitung) aufgezweigt.

Im ersten Leitungszweig (Trockengasleitung) kann der oben beschriebene Durchflussschalter angeordnet sein. Im zweiten Leitungszweig (Befeuchtungsleitung) kann ein Regelventil, insbesondere ein Proportionalventil, angeordnet sein, das den in dieser Leitung herrschenden Druck auf ein gegenüber dem ersten Leitungszweig etwas höheres Niveau einregelt, insbesondere um +0,5 bar. Im zweiten Leitungszweig (Befeuchtungsleitung) können das oder die oben beschriebenen Reservoire angeordnet, die mit Einspritzfluid befüllt sein können. Das oder die Reservoire stehen unter Druck (zweiter Leitungszweig) und können daher als "Druckbehälter" bezeichnet werden. Bei zwei oder mehreren Reservoiren teilt sich der erste Leitungszweig in mehrere Leitungszweige bzw. Einspritzleitungen auf.

Im zweiten Leitungszweig können sich in den Einspritzleitungen an das Reservoir jeweils ein Ventil, eine Durchflussmesseinrichtung und/oder ein Frequenzgenerator anschließen, wie oben beschrieben. Der zweite Leitungszweig bzw. die Einspritzleitungen können jeweils über ein oder mehrere Eingänge, insbesondere mittels Zerstäuberdüsen, in die Befeuchtungseinrichtung münden. Die Befeuchtungseinrichtung kann auch als "Mischkammer" bezeichnet werden, da dort das (vergleichsweise) trockene Druckgas aus dem ersten Leitungszweig (Trockengasleitung) und das befeuchtete Druckgas aus dem zweiten Leitungszweig (Befeuchtungsleitung) miteinander vermischt werden.

An der Befeuchtungseinrichtung werden der erste Leitungszweig (Trockengasleitung) und der zweite Leitungszweig (Befeuchtungsleitung) vereinigt. Ein weiterer Abschnitt der Strömungsverbindung führt zum Ausgang der Druckgasaufbereitungsanlage. In diesem Abschnitt kann der Kondensatfang angeordnet sein, wie oben beschrieben.

Der Befeuchtungseinrichtung kann eine Heizung zum Temperieren des Druckgases vorgeschaltet sein. Zudem kann an oder nach der Heizung ein Temperatur- und/oder Feuchtigkeitssensor angeordnet sein. Dieser Sensor und die Heizung kann mit der Steuerung der Druckgasaufbereitungsanlage verbunden sein. Somit kann die Steuerung die Leistung der Heizung entsprechend der durch den Temperatur- und/oder Feuchtigkeitssensor gemessenen Temperatur und/oder Feuchtigkeit regeln.

Am Ausgang, d.h. am ausgangsseitigen Ende der Strömungsverbindung der Druckgasaufbereitungsanlage, kann ein (gemeinsamer) Anschlussbereich, insbesondere ein Anschlussterminal, vorgesehen sein, in dem der Ausgang (Druckgasausgang), der Vorlaufanschluss und/oder der Rücklaufanschluss angeordnet sind, wie oben beschrieben.

An den Ausgang, den Vorlaufanschluss und den Rücklaufanschluss kann die oben beschriebene Schlauchanordnung angeschlossen sein. An die Schlauchanordnung kann stromabwärts ein Abnehmer des befeuchteten Druckgases angeschlossen sein, bspw. eine Sprühvorrichtung, insbesondere eine Beschichtungsanlage oder eine Beschichtungspistole.

Die Druckgasaufbereitungsanlage kann ein Gehäuse aufweisen, bspw. einen Kasten oder einen Schrank, insbesondere aus Metall, in dem zumindest ein Großteil der Komponenten der Druckgasaufbereitungsanlage untergebracht sind.

Die eingangs genannte Aufgabe wird auch durch eine Kombination aus einer Schlauchanordnung und einer Druckgasaufbereitungsanlage, jeweils wie voranstehend beschrieben, gelöst.

Die Erfindung wird im Folgenden anhand der Figuren näher erläutert, wobei gleiche oder funktional gleiche Elemente mit identischen Bezugszeichen versehen sind. Es zeigen:
- Fig.1: eine Ausführungsform einer Schlauchanordnung; und
- Fig.2: eine Ausführungsform einer Druckgasaufbereitungsanlage zur Bereitstellung von aufbereitetem Druckgas an die Schlauchanordnung aus Figur 1.

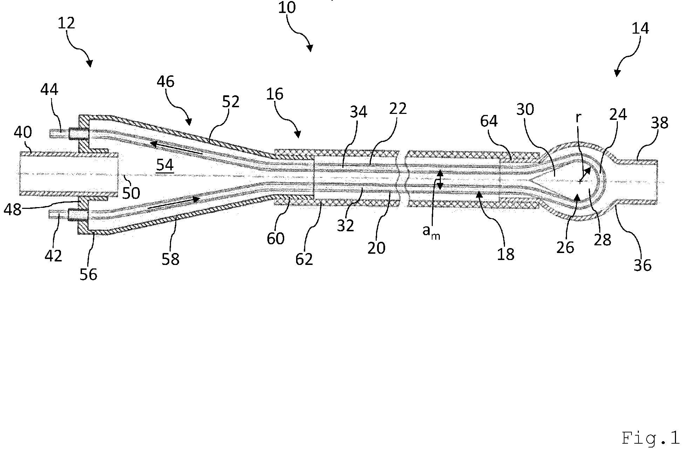

Figur 1 zeigt eine Schlauchanordnung zur Zuleitung von Druckgas bzw. Lackiergas zu einer Sprühvorrichtung, wobei die Schlauchanordnung insgesamt mit dem Bezugszeichen 10 bezeichnet ist.

Die Schlauchanordnung 10 weist ein anschlussseitiges Ende 12 und ein freies Ende 14 auf. Am anschlussseitigen Ende 12 kann die Schlauchanordnung 10 an eine Druckgasaufbereitungsanlage 100 angeschlossen werden, die nachfolgend noch beschrieben wird. Am freien Ende 14 kann eine Druckgas verbrauchende Komponente an die Schlauchanordnung 10 angeschlossen werden, bspw. eine Beschichtungspistole (nicht gezeigt).

Die Schlauchanordnung 10 weist eine sich vom anschlussseitigen Ende 12 zum freien Ende 14 erstreckende Druckgasleitung 16 auf, wobei eine Fluidleitung 18 zur Temperierung (bspw. Beheizung) der Druckgasleitung 16 vorgesehen ist. Die Fluidleitung 18 ist in der Druckgasleitung 16 angeordnet und erstreckt sich entlang der Druckgasleitung 16. Die Fluidleitung 18 weist einen sich vom anschlussseitigen Ende 12 zum freien Ende 14 erstreckenden Vorlaufabschnitt 20 auf, der am freien Ende 14 in einen Rücklaufabschnitt 22 übergeht, wobei sich der Rücklaufabschnitt 22 vom freien Ende 14 zum anschlussseitigen Ende 12 erstreckt.

Im Beispiel ist die Fluidleitung 18 am Übergang 24 vom Vorlaufabschnitt 20 zum Rücklaufabschnitt 22 bogenförmig, insbesondere U-förmig, gekrümmt und umschlingt ein Halteelement 26. Das Halteelement 26 sichert den Übergang der Fluidleitung 18 am freien Ende 14, insbesondere gegen eine Bewegung zum anschlussseitigen Ende 12 hin. Im Beispiel weist der am Übergang 24 bogenförmig gekrümmte Abschnitt einen Winkel von mehr als 180° auf.

Das Halteelement 26 weist im Beispiel zum freien Ende 14 hin einen, insbesondere halbkreisförmig, abgerundeten Abschnitt 28 auf, der der Fluidleitung 18 am Übergang 24 die Krümmung vorgibt. Das Halteelement 26 weist zum anschlussseitigen Ende 12 hin einen sich verjüngenden, insbesondere spitz zulaufenden, Abschnitt 30 auf, der den Vorlaufabschnitt 20 und den Rücklaufabschnitt 22 näher zueinander führt. Der Krümmungsradius r am Übergang 24 weist im Beispiel ein größeres Maß auf als der mittlere Abstand aₘ der Mittellängsachsen 32, 34 von Vorlaufabschnitt 20 und Rücklaufabschnitt 22 Fluidleitung 18 zwischen dem freien und dem anschlussseitigen Ende, bspw. in einem Druckschlauch der Druckgasleitung 16.

Die Druckgasleitung 16 weist am freien Ende 14 ein Anschlusselement 36 zum Anschluss einer Sprühvorrichtung (nicht gezeigt) auf, um diese mit Druckgas zu versorgen. Der Übergang 24 der Fluidleitung 18 vom Vorlaufabschnitt 20 zum Rücklaufabschnitt 22 ist im Beispiel vollständig im Anschlusselement 36 angeordnet. Das Anschlusselement 36 weist einen Anschlussabschnitt 38 auf, der bspw. als Schraubanschluss, Kupplung oder Kupplungsstecker ausgebildet sein kann.

Im Beispiel weist die Druckgasleitung 16 am anschlussseitigen Ende 12 ein weiteres Anschlusselement 40 zum Anschluss an einen Ausgang einer Druckgasaufbereitungsanlage (Bereitstellung von Druckgas) auf. Die Fluidleitung 18 weist am anschlussseitigen Ende 12 jeweils ein Vorlaufanschlusselement 42 und ein Rücklaufanschlusselement 44 zum Anschluss an eine Heizeinrichtung der Druckgasaufbereitungsanlage auf. Das weitere Anschlusselement 40, das Vorlaufanschlusselement 42 und das Rücklaufanschlusselement 44 sind im Beispiel nebeneinander angeordnet und am anschlussseitigen Ende 12 stirnseitig aus der Schlauchanordnung 10 herausgeführt. Das Vorlaufanschlusselement 42 ist mit dem Vorlaufabschnitt 20 und das Rücklaufanschlusselement 44 ist mit dem Rücklaufabschnitt 22 verbunden bzw. strömungsverbunden.

Im Beispiel ist am anschlussseitigen Ende 12 ein Anschlussstück 46 vorgesehen, welches eine Stirnwand 48 aufweist. Das weitere Anschlusselement 40, das Vorlaufanschlusselement 42 und das Rücklaufanschlusselement 44 sind nebeneinander, insbesondere parallel zueinander, durch die Stirnwand 48 hindurchgeführt und an der Stirnwand 48 befestigt. Das, bspw. metallisch ausgebildete, Anschlussstück 46 kann optional eine Isolation aufweisen, wie oben erläutert (nicht dargestellt).

Im Beispiel weist das Anschlussstück 46 eine umlaufende, sich entlang der Längsrichtung 50 des Anschlussstücks 46 erstreckende Wandung 52 auf, die einen Innenraum 54 begrenzt und einen Teil (axialer Abschnitt) der Druckgasleitung 16 definiert. Das Anschlussstück 46 weist im Beispiel drei axiale Abschnitte auf: Einen an die Stirnwand 48 angrenzenden Abschnitt 56 mit einem ersten Außendurchmesser, einen sich in Richtung des freien Endes verjüngenden Abschnitt 58 und einen weiteren Abschnitt 60 mit einem zweiten Außendurchmesser, wobei der zweite Außendurchmesser kleiner als der erste Außendurchmesser ist.

Die Druckgasleitung 16 weist einen Druckschlauch 62 auf, der das Anschlussstück 46 mit dem Anschlusselement 36 am freien Ende 14 der Schlauchanordnung 10 verbindet. Der (das Druckgas führende) Druckschlauch 62 ist einends an den weiteren Abschnitt 60 des Anschlussstücks 46 angeschlossen und andernends an einen am weiteren Anschlusselement 40 ausgebildeten Anschlussabschnitt 64. Der Druckschlauch 62 kann an seinen Enden auf den weiteren Abschnitt 60 und den Anschlussabschnitt 64 aufgeschoben und/oder aufgepresst sein.

Es kann eine Druckbegrenzungseinrichtung an der Schlauchanordnung 10 vorgesehen sein (nicht dargestellt), die den Druck in der Druckgasleitung 16 auf einen definierten Maximaldruck begrenzt, bspw. auf einen maximalen Druck von 15 bar. Die Druckbegrenzungseinrichtung kann am Anschlussstück 46 oder am weiteren Anschlusselement 40 angeschlossen sein, wobei die Druckbegrenzungseinrichtung mit der Druckgasleitung 16 strömungsverbunden ist. Die Druckbegrenzungseinrichtung kann bspw. als Überdruckventil ausgebildet sein.

In der Druckgasleitung 16 kann optional ein Temperatur- und/oder Feuchtigkeitssensor angeordnet sein, wie oben beschrieben (nicht gezeigt). Ebenfalls optional kann in der Druckgasleitung 16 ein Tropfenabscheider angeordnet sein, wie oben beschrieben (nicht dargestellt).

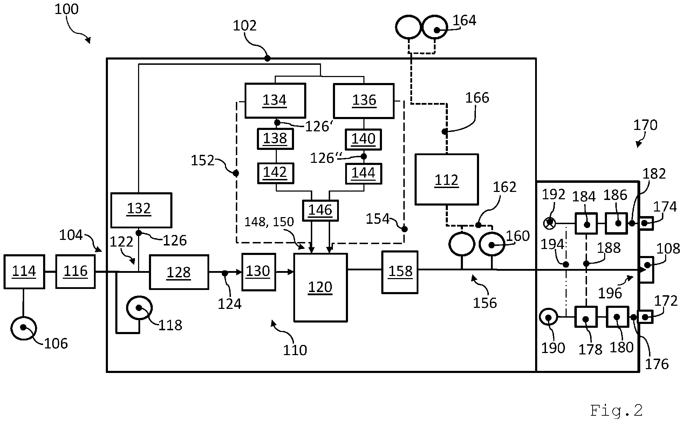

Figur 2 zeigt eine Druckgasaufbereitungsanlage 100 zur Bereitstellung von aufbereitetem Druckgas an die oben beschriebene Schlauchanordnung 10, die eine Druckgasleitung 16 und eine Fluidleitung 18 aufweist. Die Schlauchanordnung 10 ist dazu eingerichtet und bestimmt, um an die Druckgasaufbereitungsanlage 100 angeschlossen zu werden.

Die Druckgasaufbereitungsanlage 100 weist ein Gehäuse 102 auf, in dem ein Großteil der Komponenten der Druckgasaufbereitungsanlage 100 angeordnet ist.

Die Druckgasaufbereitungsanlage 100 weist einen Eingang 104 auf, an den eine Druckgasquelle 106 angeschlossen werden kann, bspw. ein Druckgasspeicher oder ein Kompressor. Zudem weist die Druckgasaufbereitungsanlage 100 einen Ausgang 108 zur Bereitstellung von aufbereitetem Druckgas auf, bspw. an eine an die Schlauchanordnung 10 angeschlossene Sprühvorrichtung, insbesondere eine Beschichtungspistole (nicht gezeigt).

Der Eingang 104 und der Ausgang 108 sind mittels einer Strömungsverbindung 110 miteinander strömungsverbunden. Dies wird nachfolgend erläutert. Die Druckgasaufbereitungsanlage 100 weist eine Steuerung 112 auf, die zur Steuerung, Regelung und oder Überwachung von Komponenten der Druckgasaufbereitungsanlage 100 dient. An die Steuerung 112 können Sensoren, Aktoren, Schalter oder dgl. angeschlossen sein (in der Figur zur besseren Übersichtlichkeit nur teilweise gezeigt).

Dem Eingang 104 können optional eine Filtereinheit 114 und/oder ein, vorzugsweise manueller, Druckregler 116 vorgeschaltet sein. An den Eingang 104 (eingangsseitiger Anschluss 104) ist ein Drucksensor 118 angeschlossen, der den am Eingang 104 herrschenden Eingangsdruck erfasst. Der Drucksensor 118 ist drahtlos oder drahtgebunden mit der Steuerung 112 gekoppelt (nicht gezeigt).

Zwischen dem Eingang 104 und einer in der Strömungsverbindung 110 angeordneten Befeuchtungseinrichtung 120 ist eine Abzweigung 122 vorgesehen, an der sich die Strömungsverbindung 110 in einen ersten Leitungszweig 124 (Trockengasleitung 124) und einen zweiten Leitungszweig 126 (Befeuchtungsleitung 126) aufzweigt.

Im ersten Leitungszweig 124 ist ein Durchflussschalter 128 angeordnet, der ermittelt, ob am Ausgang 108 Druckgas entnommen wird. Hierzu erfasst der Durchflussschalter 128 die im ersten Leitungszweig 124 herrschende Strömung. Der Durchflussschalter 128 ist drahtlos oder drahtgebunden mit der Steuerung 112 gekoppelt (nicht gezeigt).

Im ersten Leitungszweig 124 ist eine Heizung 130 zum Temperieren des in diesem Leitungszweig 124 strömenden Druckgases vorgesehen. Nach Passieren der Heizung 130 mündet der Leitungszweig in die Befeuchtungseinrichtung 120 (Mischkammer 120). Die Heizung 130 kann drahtlos oder drahtgebunden mit der Steuerung 112 gekoppelt sein (nicht gezeigt).

Im zweiten Leitungszweig 126 (Befeuchtungsleitung 126) ist ein Regelventil 132, insbesondere ein Proportionalventil 132, angeordnet. Das Regelventil 132 regelt den im zweiten Leitungszweig 126 herrschenden Druck auf ein gegenüber dem ersten Leitungszweig 124 etwas höheres Druckniveau ein, bspw. um +0,5 bar. Das Regelventil 132 kann drahtlos oder drahtgebunden mit der Steuerung 112 gekoppelt sein (nicht gezeigt).

Im zweiten Leitungszweig 126 ist zudem mindestens ein Reservoir 134 für ein Einspritzfluid vorgesehen. Im Beispiel sind im zweiten Leitungszweig 126 zwei Reservoire 134, 136 für ein Einspritzfluid vorgesehen. Der zweite Leitungszweig 126 teilt sich im Beispiel vor den beiden Reservoiren 134, 136 in zwei Teilzweige 126', 126" bzw. Einspritzleitungen 126', 126" auf.

Die Reservoire 134, 136 können jeweils mit einem flüssigen Einspritzfluid befüllt sein. Bspw. kann das erste Reservoir 134 mit Wasser, insbesondere mit demineralisiertem Wasser, als Einspritzfluid befüllt sein. Das zweite Reservoir 136 kann mit einem davon abweichenden Einspritzfluid, bspw. mit einer Flüssigkeit mit antistatischer Wirkung befüllt sein (Additiv). Die Reservoire 134, 136 stehen bedingt durch den im zweiten Leitungszweig 126 herrschenden Druck ebenfalls unter Druck. Alternativ kann an den Reservoiren 134, 136 eine Pumpe zur Beaufschlagung mit Druck vorgesehen sein, wie oben erläutert.

Im zweiten Leitungszweig 126 ist den Reservoiren 134, 136 jeweils ein Ventil 138, 140 nachgeschaltet, mittels denen jeweils der Durchfluss geregelt werden kann. Die Ventile 138, 140 können jeweils einen ansteuerbaren Aktor aufweisen (nicht gezeigt), mittels dem das jeweilige Ventil 138, 140 betätigt werden kann. Die Ventile 138, 140 bzw. deren Aktoren können drahtlos oder drahtgebunden mit der Steuerung 112 verbunden sein (nicht gezeigt). Durch die Steuerung 112 kann durch Ansteuerung der Ventile 138, 140 bzw. von deren Aktoren der Durchfluss geregelt werden, bspw. in Abhängigkeit von der vom Durchflussschalter 128 ermittelten Strömung und/oder in Abhängigkeit von der von Durchflussmesseinrichtungen in den Einspritzleitungen 126', 126" erfassten Durchflussmengen (nachfolgend erläutert).

Im zweiten Leistungszweig 126 ist den Reservoiren 134, 136 außerdem jeweils eine Durchflussmesseinrichtung 142, 144 zur Erfassung der Durchflussmenge des jeweiligen Einspritzfluids nachgeschaltet. Die Durchflussmesseinrichtung 142, 144 kann eine Messsensorik aufweisen, die drahtlos oder drahtgebunden mit der Steuerung 112 gekoppelt ist (nicht gezeigt). Mittels der Durchflussmesseinrichtungen 142, 144 lässt sich die Menge des Einspritzfluids in den Einspritzleitungen 126', 126" präzise erfassen und ggf. feinabstimmen, bspw. durch Ansteuerung der Ventile 138, 140 bzw. von deren Aktoren mittels der Steuerung 112.

Im zweiten Leistungszweig 126 ist den Reservoiren 134, 136 außerdem ein Frequenzgenerator 146 nachgeschaltet, welchen die Einspritzleitungen 126', 126" jeweils zur Anregung des Einspritzfluids (mittels einer oder mehrerer Frequenzen) passieren. Dadurch kann das Spritzverhalten optimiert werden. Der Frequenzgenerator 146 ist insbesondere derart eingerichtet, dass keine Anregung (Frequenzgenerator deaktiviert), eine gezielte Anregung von nur einer Einspritzleitung 126', 126" oder eine Anregung beider Einspritzleitungen 126', 126" erfolgen kann, wie oben erläutert.

Die Einspritzleitungen 126', 126" im zweiten Leistungszweig 126 weisen jeweils eine oder mehrere Einspritzdüsen bzw. Zerstäuberdüsen auf (nicht gezeigt), mittels denen die Einspritzleitungen 126', 126" jeweils an Eingängen 148, 150 in die Befeuchtungseinrichtung 120 münden. An den Einspritzdüsen ist jeweils eine Düsenrückspüleinrichtung zur, insbesondere permanenten, Reinigung der Einspritzdüse vorgesehen (nicht gezeigt). Die Düsenrückspüleinrichtung weist im Beispiel jeweils eine Rückspülleitung 152, 154 zur Rückführung von überschüssigem Einspritzfluid zum jeweiligen Reservoir 134, 136 für Einspritzfluid auf. In der Befeuchtungseinrichtung 120 werden das (vergleichsweise) trockene Druckgas aus dem ersten Leitungszweig 124 und das befeuchtete Druckgas aus dem zweiten Leitungszweig 126 miteinander vermischt.

Ein weiterer Abschnitt 156 der Strömungsverbindung 110 führt von der Befeuchtungseinrichtung 120 zum Ausgang 108. Im Abschnitt 156 ist eine Kondensatfangeinrichtung 158 eingebunden, mit der überschüssiges Einspritzfluid aufgefangen werden kann, noch bevor das befeuchtete Druckgas den Ausgang 108 erreicht.

Im Abschnitt 134 ist ein Druck- und/oder Temperatursensor 160 vorgesehen, der Druck und/oder Temperatur nach der Befeuchtungseinrichtung 120 bzw. nach der Kondensatfangeinrichtung 158 erfasst und mittels einer drahtlosen oder drahtgebundenen Verbindung 162 mit der Steuerung 112 gekoppelt ist. Zudem ist außerhalb der Druckgasaufbereitungsanlage 100, insbesondere außerhalb des Gehäuses 102, ein Druck- und/oder Temperatursensor 164 vorgesehen, der mittels einer drahtlosen oder drahtgebundenen Verbindung 166 mit der Steuerung 112 verbunden ist.

Die Druckgasaufbereitungsanlage 100 weist eine Heizeinrichtung 170 zur Beheizung einer Flüssigkeit auf, wobei die Heizeinrichtung 170 einen Vorlaufanschluss 172 zur Abgabe beheizter Flüssigkeit an den Vorlaufabschnitt 20 der Fluidleitung 18 der Schlauchanordnung 10 und einen Rücklaufanschluss 174 zur Einspeisung rückgeführter Flüssigkeit von einem Rücklaufabschnitt 22 der Fluidleitung 18 der Schlauchanordnung 10 aufweist.

Die Heizeinrichtung 170 weist eine mit dem Vorlaufanschluss 172 strömungsverbundene Vorlaufleitung 176 auf, wobei in die Vorlaufleitung 176 ein Heizelement 178 zur Beheizung der Flüssigkeit (Flüssigkeit zur Beheizung der Fluidleitung 18 der Schlauchanordnung 10) eingebunden ist. Durch das Heizelement 178 kann das Trägermedium (Flüssigkeit, bspw. Wasser) erwärmt werden, bevor dieses über den Vorlaufanschluss 172 an die Fluidleitung 18 ausgegeben wird. Unabhängig davon kann in der Vorlaufleitung 176 eine Pumpe 180 zur Förderung der Flüssigkeit und/oder ein Druckausgleichselement (nicht gezeigt) vorgesehen sein.

Die Heizeinrichtung 170 weist eine mit dem Rücklaufanschluss 174 strömungsverbundene Rücklaufleitung 182 auf, wobei in die Rücklaufleitung ein Wärmetauscher 184 zur Aufnahme von Wärmeenergie von in der Rücklaufleitung 182 geführter Flüssigkeit eingebunden ist. Dadurch kann der über den Rücklaufanschluss 174 rückgeführten Flüssigkeit Wärmeenergie entnommen und bspw. an eine der Befeuchtungseinrichtung 120 in der Strömungsverbindung 110 vorgeschaltete Heizung 130 und/oder an das in die Vorlaufleitung 176 eingebundene Heizelement 178 abgegeben werden. Unabhängig davon kann in der Rücklaufleitung 182 eine Pumpe 186 zur Förderung der Flüssigkeit vorgesehen sein.

Insbesondere können der Wärmetauscher 184 und das Heizelement 178 thermisch derart miteinander gekoppelt sein (thermische Verbindung 188), dass durch den Wärmetauscher 184 aufgenommene Wärmeenergie an das Heizelement 178 an der Vorlaufleitung 176 abgegeben werden kann.

Die Vorlaufleitung 176 kann mit einer Fluidquelle 190 zur Zuführung von Flüssigkeit strömungsverbunden sein. Die Rücklaufleitung 182 kann mit einer Fluidsenke 192 zur Abführung von Flüssigkeit strömungsverbunden sein.

Optional können die Vorlaufleitung 176 und die Rücklaufleitung 182 miteinander strömungsverbunden sein (Strömungsverbindung 194). Dadurch kann an der Rücklaufleitung 182 rückgeführte Flüssigkeit, die möglicherweise Restwärme enthält, der Vorlaufleitung 176 zugeführt und, bspw. nach Durchlaufen des Heizelements 178, erneut am Vorlaufanschluss 172 bereitgestellt werden.

Ist die Fluidleitung 18 der Schlauchanordnung 10 mit ihrem Vorlaufabschnitt 20 und ihrem Rücklaufabschnitt 22 jeweils an den Vorlaufanschluss 172 und an den Rücklaufanschluss 174 angeschlossen, bilden die Vorlaufleitung 176, die Fluidleitung 18 und die Rücklaufleitung 182 einen Heizkreislauf, den die Flüssigkeit durchlaufen kann. Sind die Rücklaufleitung 182 und die Vorlaufleitung 176 miteinander strömungsverbunden, kann der Wärmetauscher 184 an der Rücklaufleitung 182 entfallen.

Der Vorlaufanschluss 172, der Rücklaufanschluss 174 und der Ausgang 108 sind im Beispiel in einem gemeinsamen (ausgangsseitigen) Anschlussbereich 196 der Druckgasaufbereitungsanlage 100 benachbart zueinander angeordnet. Dadurch kann die Schlauchanordnung 10 auf einfache Weise an die Druckgasaufbereitungsanlage angeschlossen werden.

Die Schlauchanordnung 10 ist zum Anschluss an die Druckgasaufbereitungsanlage 100 eingerichtet und/oder bestimmt. Ist die Schlauchanordnung 10 an die Druckgasaufbereitungsanlage 100 angeschlossen, ist der Ausgang 108 über das Anschlusselement 40 mit der Druckgasleitung 16 strömungsverbunden, der Vorlaufanschluss 172 ist über das Vorlaufanschlusselement 42 mit dem Vorlaufabschnitt 20 der Fluidleitung 18 strömungsverbunden und der Rücklaufabschluss 174 ist über das Rücklaufanschlusselement 44 mit dem Rücklaufabschnitt 20 der Fluidleitung 18 strömungsverbunden.

## Patentansprüche

1. Schlauchanordnung (10) zur Zuleitung von Druckgas zu einer Sprühvorrichtung, mit einer sich von einem anschlussseitigen Ende (12) zu einem freien Ende (14) erstreckenden Druckgasleitung (16), wobei eine Fluidleitung (18) zur Temperierung der Druckgasleitung (16) vorgesehen ist, **dadurch gekennzeichnet, dass** die Fluidleitung (18) in der Druckgasleitung (16) angeordnet ist und sich entlang der Druckgasleitung (16) erstreckt, wobei die Fluidleitung (18) einen sich vom anschlussseitigen Ende (12) zum freien Ende (14) erstreckenden Vorlaufabschnitt (20) aufweist, der am freien Ende (14) in einen Rücklaufabschnitt (22) übergeht, wobei sich der Rücklaufabschnitt (22) vom freien Ende (14) zum anschlussseitigen Ende (12) erstreckt.

2. Schlauchanordnung (10) nach Anspruch 1, **dadurch gekennzeichnet, dass** die Fluidleitung (18) am Übergang (24) vom Vorlaufabschnitt (20) zum Rücklaufabschnitt (22) bogenförmig, insbesondere U-förmig, gekrümmt ist und ein Halteelement (26) umschlingt, welches den Übergang (24) der Fluidleitung (18) am freien Ende (14) sichert.

3. Schlauchanordnung (10) nach Anspruch 1 oder 2, **dadurch gekennzeichnet, dass** die Druckgasleitung (16) am freien Ende (14) ein Anschlusselement (36) zum Anschluss einer Sprühvorrichtung aufweist, wobei der Übergang (24) der Fluidleitung (18) vom Vorlaufabschnitt (20) zum Rücklaufabschnitt (22) zumindest großenteils, vorzugweise vollständig, im Anschlusselement (36) angeordnet ist.

4. Schlauchanordnung (10) nach einem der voranstehenden Ansprüche, **dadurch gekennzeichnet, dass** die Druckgasleitung (16) am anschlussseitigen Ende (12) ein weiteres Anschlusselement (40) zum Anschluss an einen Ausgang (108) einer Druckgasaufbereitungsanlage (100) aufweist und dass die Fluidleitung (18) am anschlussseitigen Ende (12) jeweils ein Vorlaufanschlusselement (42) und ein Rücklaufanschlusselement (44) zum Anschluss an eine Heizeinrichtung (170) aufweist, wobei das weitere Anschlusselement (40), das Vorlaufanschlusselement (42) und das Rücklaufanschlusselement (44) nebeneinander angeordnet und am anschlussseitigen Ende (12) stirnseitig aus der Schlauchanordnung (10) herausgeführt sind.

5. Schlauchanordnung (10) nach Anspruch 4, **dadurch gekennzeichnet, dass** am anschlussseitigen Ende (12) ein Anschlussstück (46) vorgesehen ist, welches eine Stirnwand (48) aufweist, wobei das weitere Anschlusselement (40), das Vorlaufanschlusselement (42) und das Rücklaufanschlusselement (44) nebeneinander, insbesondere parallel zueinander, durch die Stirnwand (48) hindurchgeführt und/oder an der Stirnwand (48) befestigt sind.

6. Schlauchanordnung (10) nach Anspruch 5, **dadurch gekennzeichnet, dass** das Anschlussstück (46) eine umlaufende, sich entlang der Längsrichtung (50) des Anschlussstücks (46) erstreckende Wandung (52) aufweist, die einen Innenraum (54) begrenzt und einen Teil der Druckgasleitung (16) definiert und/oder dass das Anschlussstück (46) seinen Querschnitt in Richtung des freien Endes (14) axial abschnittsweise verjüngt.

7. Schlauchanordnung (10) nach Anspruch 5 oder 6, **dadurch gekennzeichnet, dass** die Druckgasleitung (16) einen Druckschlauch (62) aufweist, der das Anschlussstück (46) mit dem Anschlusselement (36) am freien Ende (14) verbindet und/oder dass eine Druckbegrenzungseinrichtung vorgesehen ist, die den Druck in der Druckgasleitung (16) auf einen definierten Maximaldruck begrenzt.

8. Druckgasaufbereitungsanlage (100) zur Bereitstellung von aufbereitetem Druckgas an eine Schlauchanordnung (10) nach einem der voranstehenden Ansprüche, wobei die Druckgasaufbereitungsanlage (100) einen Eingang (104) zum Anschluss einer Druckgasquelle (106) und einen Ausgang (108) zur Bereitstellung des aufbereiteten Druckgases an eine Druckgasleitung (16) aufweist, wobei der Eingang (104) und der Ausgang (108) miteinander strömungsverbunden sind und in der Strömungsverbindung (110) eine Befeuchtungseinrichtung (120) zur Befeuchtung des Druckgases angeordnet ist, **dadurch gekennzeichnet, dass** die Druckgasaufbereitungsanlage (100) eine Heizeinrichtung (170) zur Beheizung einer Flüssigkeit aufweist, wobei die Heizeinrichtung (170) einen Vorlaufanschluss (172) zur Abgabe beheizter Flüssigkeit an einen Vorlaufabschnitt (20) der Fluidleitung (18) und einen Rücklaufanschluss (174) zur Einspeisung rückgeführter Flüssigkeit von einem Rücklaufabschnitt (22) der Fluidleitung (18) aufweist.

9. Druckgasaufbereitungsanlage (100) nach Anspruch 8, **dadurch gekennzeichnet, dass** die Druckgasaufbereitungsanlage (100) ein oder mehrere Reservoire (134, 136) für ein Einspritzfluid aufweist, wobei das oder die Reservoire (134, 136) jeweils mittels einer Einspritzleitung (126', 126'') mit der Befeuchtungseinrichtung (120) verbunden sind, so dass die Befeuchtungseinrichtung (120) mit Einspritzfluid gespeist werden kann.

10. Druckgasaufbereitungsanlage (100) nach Anspruch 9, **dadurch gekennzeichnet, dass** die Druckgasaufbereitungsanlage (100) derart eingerichtet ist, dass dann, wenn am Ausgang (108) kein Druckgas entnommen wird, die Zufuhr von Einspritzfluid zur Befeuchtungseinrichtung (120) gestoppt wird und/oder dass bei mehreren Reservoiren (134, 136) in den Reservoiren (134, 136) jeweils unterschiedliche Einspritzfluide enthalten sind.

11. Druckgasaufbereitungsanlage (100) nach Anspruch 9 oder 10, **dadurch gekennzeichnet, dass** die Einspritzleitung oder die Einspritzleitungen (126', 126") jeweils einen Frequenzgenerator (146) zur Anregung des Einspritzfluids passieren und/oder dass die Einspritzleitung oder die Einspritzleitungen (126', 126") jeweils eine oder mehrere Einspritzdüsen aufweisen, mittels denen die Einspritzleitungen (126', 126") jeweils in die Befeuchtungseinrichtung (120) münden, wobei an den Einspritzdüsen jeweils eine Düsenrückspüleinrichtung zur insbesondere permanenten Reinigung der Einspritzdüse vorgesehen ist.

12. Druckgasaufbereitungsanlage (100) nach Anspruch 11, **dadurch gekennzeichnet, dass** die Düsenrückspüleinrichtung jeweils eine Rückspülleitung (152, 154) zur Rückführung von überschüssigem Einspritzfluid zum jeweiligen Reservoir (134, 136) für Einspritzfluid aufweist.

13. Druckgasaufbereitungsanlage (100) nach einem der Ansprüche 9 bis 12, **dadurch gekennzeichnet, dass** in der oder den Einspritzleitungen (126', 126") jeweils eine Durchflussmesseinrichtung (142, 144) zur Erfassung der Durchflussmenge des jeweiligen Einspritzfluids eingebunden ist und/oder dass in der oder den Einspritzleitungen (126', 126") jeweils ein Ventil (138, 140) angeordnet ist, mittels dem die Zufuhr des Einspritzfluids regelbar ist.

14. Druckgasaufbereitungsanlage (100) nach einem der Ansprüche 9 bis 13, **dadurch gekennzeichnet, dass** in die Strömungsverbindung (110) zwischen der Befeuchtungseinrichtung (120) und dem Ausgang (108) eine Kondensatfangeinrichtung (158) eingebunden ist und/oder dass die Heizeinrichtung (170) eine mit dem Vorlaufanschluss (172) strömungsverbundene Vorlaufleitung (176) aufweist, wobei in die Vorlaufleitung (176) ein Heizelement (178) zur Beheizung der Flüssigkeit eingebunden ist.

15. Druckgasaufbereitungsanlage (100) nach einem der Ansprüche 9 bis 14, **dadurch gekennzeichnet, dass** die Heizeinrichtung (170) eine mit dem Rücklaufanschluss (174) strömungsverbundene Rücklaufleitung (182) aufweist, wobei in die Rücklaufleitung (182) ein Wärmetauscher (184) zur Aufnahme von Wärmeenergie von in der Rücklaufleitung (182) geführter Flüssigkeit eingebunden ist.

16. Druckgasaufbereitungsanlage (100) nach Anspruch 14 und 15, **dadurch gekennzeichnet, dass** der Wärmetauscher (184) und das Heizelement (178) thermisch derart miteinander gekoppelt sind, dass durch den Wärmetauscher (184) aufgenommene Wärmeenergie an das Heizelement (178) an der Vorlaufleitung (176) abgegeben werden kann.

17. Druckgasaufbereitungsanlage (100) nach einem der Ansprüche 14 bis 16, **dadurch gekennzeichnet, dass** die Vorlaufleitung (176) mit einer Fluidquelle (190) zur Zuführung von Flüssigkeit strömungsverbunden ist, dass die Rücklaufleitung (182) mit einer Fluidsenke (192) zur Abführung von Flüssigkeit strömungsverbunden ist und/oder dass die Vorlaufleitung (176) und die Rücklaufleitung (182) miteinander strömungsverbunden sind.

18. Druckgasaufbereitungsanlage (100) nach einem der Ansprüche 8 bis 17, **dadurch gekennzeichnet, dass** eine Steuerung (112) für die Druckgasaufbereitungsanlage (100) vorgesehen ist und/oder dass der Vorlaufanschluss (172), der Rücklaufanschluss (174) und der Ausgang (108) in einem Anschlussbereich (196) benachbart zueinander angeordnet sind.

## Claims

1. Hose arrangement (10) for supplying compressed gas to a spray device, comprising a compressed gas line (16) extending from a connection-side end (12) to a free end (14), a fluid line (18) being provided for controlling the temperature of the compressed gas line (16), **characterized in that** the fluid line (18) is arranged in the compressed gas line (16) and extends along the compressed gas line (16), the fluid line (18) having a supply portion (20) extending from the connection-side end (12) to the free end (14), which portion merges at the free end (14) into a return portion (22), the return portion (22) extending from the free end (14) to the connection-side end (12).

2. Hose arrangement (10) according to claim 1, **characterized in that** the fluid line (18) is curved in an arc shape, in particular in a U-shape, at the transition (24) from the supply portion (20) to the return portion (22) and wraps around a holding element (26) which secures the transition (24) of the fluid line (18) at the free end (14).

3. Hose arrangement (10) according to claim 1 or 2, **characterized in that** the compressed gas line (16) has a connection element (36) at the free end (14) for connecting a spray device, the transition (24) of the fluid line (18) from the supply portion (20) to the return portion (22) being at least largely, preferably completely, arranged in the connection element (36).

4. Hose arrangement (10) according to any of the preceding claims, **characterized in that** the compressed gas line (16) has a further connection element (40) at the connection-side end (12) for connection to an outlet (108) of a compressed gas processing plant (100) and **in that** the fluid line (18) has a supply connection element (42) and a return connection element (44) at the connection-side end (12) for connection to a heating device (170), the further connection element (40), the supply connection element (42) and the return connection element (44) being arranged next to one another and on the connection-side end (12) being led out of the hose arrangement (10) at the front end.

5. Hose arrangement (10) according to claim 4, **characterized in that** a connection piece (46) is provided at the connection-side end (12), which piece has a front wall (48), the further connection element (40), the supply connection element (42) and the return connection element (44) being guided next to one another, in particular parallel to one another, through the front wall (48) and/or being fastened to the front wall (48).

6. Hose arrangement (10) according to claim 5, **characterized in that** the connection piece (46) has a circumferential wall (52) which extends along the longitudinal direction (50) of the connection piece (46), delimits an interior space (54) and defines a part of the compressed gas line (16) and/or **in that** the connection piece (46) tapers its cross section axially in portions in the direction of the free end (14).

7. Hose arrangement (10) according to claim 5 or 6, **characterized in that** the compressed gas line (16) has a pressure hose (62) which connects the connection piece (46) to the connection element (36) at the free end (14) and/or **in that** a pressure limiting device is provided which limits the pressure in the compressed gas line (16) to a defined maximum pressure.

8. Compressed gas processing plant (100) for providing processed compressed gas to a hose arrangement (10) according to any of the preceding claims, the compressed gas processing plant (100) having an inlet (104) for connecting a compressed gas source (106) and an outlet (108) for providing the processed compressed gas to a compressed gas line (16), the inlet (104) and the outlet (108) being fluidly connected to one another and a humidification device (120) for humidifying the compressed gas being arranged in the flow connection (110), **characterized in that** the compressed gas processing plant (100) has a heating device (170) for heating a liquid, the heating device (170) having a supply connection (172) for delivering heated liquid to a supply portion (20) of the fluid line (18) and a return connection (174) for feeding returned liquid from a return portion (22) of the fluid line (18).

9. Compressed gas processing plant (100) according to claim 8,
**characterized in that** the compressed gas processing plant (100) has one or more reservoirs (134, 136) for an injection fluid, the reservoir or reservoirs (134, 136) each being connected to the humidification device (120) by means of an injection line (126', 126") so that the humidification device (120) can be fed with injection fluid.

10. Compressed gas processing plant (100) according to claim 9,
**characterized in that** the compressed gas processing plant (100) is designed such that when no compressed gas is removed at the outlet (108), the supply of injection fluid to the humidification device (120) is stopped and/or **in that**, in the case of a plurality of reservoirs (134, 136), different injection fluids are contained in the reservoirs (134, 136).

11. Compressed gas processing plant (100) according to claim 9 or 10, **characterized in that** the injection line or the injection lines (126', 126") each pass a frequency generator (146) for exciting the injection fluid and/or **in that** the injection line or the injection lines (126', 126") each have one or more injection nozzles by means of which the injection lines (126', 126") each open into the humidification device (120), a nozzle backflushing device being provided on the injection nozzles in each case for in particular permanently cleaning the injection nozzle.

12. Compressed gas processing plant (100) according to claim 11,
**characterized in that** the nozzle backflushing device has a backflushing line (152, 154) for returning excess injection fluid to the relevant reservoir (134, 136) for injection fluid.

13. Compressed gas processing plant (100) according to any of claims 9 to 12, **characterized in that** a flow measuring device (142, 144) for detecting the flow rate of the relevant injection fluid is integrated into each of the injection lines (126', 126") and/or in that a valve (138, 140) is arranged in each of the injection lines (126', 126"), by means of which valve the supply of the injection fluid can be controlled by means of closed-loop control.

14. Compressed gas processing plant (100) according to any of claims 9 to 13, **characterized in that** a condensate collecting device (158) is integrated into the flow connection (110) between the humidification device (120) and the outlet (108) and/or **in that** the heating device (170) has a supply line (176) which is fluidly connected to the supply connection (172), a heating element (178) for heating the liquid being integrated into the supply line (176).

15. Compressed gas processing plant (100) according to any of claims 9 to 14, **characterized in that** the heating device (170) has a return line (182) which is fluidly connected to the return connection (174), a heat exchanger (184) for absorbing thermal energy from liquid guided in the return line (182) being integrated into the return line (182).

16. Compressed gas processing plant (100) according to claims 14 and 15, **characterized in that** the heat exchanger (184) and the heating element (178) are thermally coupled to one another in such a way that thermal energy absorbed by the heat exchanger (184) can be delivered to the heating element (178) on the supply line (176).

17. Compressed gas processing plant (100) according to any of claims 14 to 16, **characterized in that** the supply line (176) is fluidly connected to a fluid source (190) for supplying liquid, **in that** the return line (182) is fluidly connected to a fluid sink (192) for discharging liquid and/or **in that** the supply line (176) and the return line (182) are fluidly connected to one another.

18. Compressed gas processing plant (100) according to any of claims 8 to 17, **characterized in that** an open-loop control device (112) is provided for the compressed gas processing plant (100) and/or **in that** the supply connection (172), the return connection (174) and the outlet (108) are arranged adjacent to one another in a connection region (196).

## Revendications

1. Système formant tuyau (10) pour la conduite d'amenée en gaz comprimé vers un dispositif de pulvérisation, comportant une conduite de gaz comprimé (16) s'étendant d'une extrémité côté raccordement (12) à une extrémité libre (14), dans lequel une conduite de fluide (18) est prévue pour l'équilibrage de température de la conduite de gaz comprimé (16), **caractérisé en ce que** la conduite de fluide (18) est disposée dans la conduite de gaz comprimé (16) et s'étend le long de la conduite de gaz comprimé (16), dans lequel la conduite de fluide (18) présente une section de départ (20) s'étendant de l'extrémité côté raccordement (12) à l'extrémité libre (14), laquelle section de départ se prolonge au niveau de l'extrémité libre (14) en une section de retour (22), dans lequel la section de retour (22) s'étend de l'extrémité libre (14) à l'extrémité côté raccordement (12).

2. Système formant tuyau (10) selon la revendication 1, **caractérisé en ce que** la conduite de fluide (18) est recourbée en forme d'arc, en particulier en forme de U, au niveau du prolongement (24) de la section de départ (20) à la section de retour (22) et entoure un élément de retenue (26) qui sécurise le prolongement (24) de la conduite de fluide (18) au niveau de l'extrémité libre (14).

3. Système formant tuyau (10) selon la revendication 1 ou 2,
**caractérisé en ce que** la conduite de gaz comprimé (16) présente, au niveau de l'extrémité libre (14), un élément de raccordement (36) pour le raccordement d'un dispositif de pulvérisation, dans lequel le prolongement (24) de la conduite de fluide (18) de la section de départ (20) à la section de retour (22) est disposé au moins en grande partie, de préférence entièrement, dans l'élément de raccordement (36).

4. Système formant tuyau (10) selon l'une des revendications précédentes, **caractérisé en ce que** la conduite de gaz comprimé (16) présente, au niveau de l'extrémité côté raccordement (12), un autre élément de raccordement (40) pour le raccordement à une sortie (108) d'une installation de traitement de gaz comprimé (100) **et en ce que** la conduite de fluide (18) présente, au niveau de l'extrémité côté raccordement (12) respectivement un élément de raccordement de départ (42) et un élément de raccordement de retour (44) pour le raccordement à un dispositif chauffant (170), dans lequel l'autre élément de raccordement (40), l'élément de raccordement de départ (42) et l'élément de raccordement de retour (44) sont disposés les uns à côté des autres et sont guidés frontalement hors du système formant tuyau (10) au niveau de l'extrémité côté raccordement (12).

5. Système formant tuyau (10) selon la revendication 4, **caractérisé en ce que,** au niveau de l'extrémité côté raccordement (12), une pièce de raccordement (46) est prévue, laquelle présente une paroi frontale (48), dans lequel l'autre élément de raccordement (40), l'élément de raccordement de départ (42) et l'élément de raccordement de retour (44) sont guidés les uns à côté des autres, en particulier parallèlement les uns aux autres, à travers la paroi frontale (48) et/ou sont fixés à la paroi frontale (48).

6. Système formant tuyau (10) selon la revendication 5, **caractérisé en ce que** la pièce de raccordement (46) présente une paroi (52) circonférentielle s'étendant le long de la direction longitudinale (50) de la pièce de raccordement (46), laquelle paroi délimite un espace intérieur (54) et définit une partie de la conduite de gaz comprimé (16) **et/ou en ce que** la pièce de raccordement (46) rétrécit axialement dans certaines sections sa section transversale en direction de l'extrémité libre (14).

7. Système formant tuyau (10) selon la revendication 5 ou 6,
**caractérisé en ce que** la conduite de gaz comprimé (16) présente un tuyau de pression (62) qui raccorde la pièce de raccordement (46) à l'élément de raccordement (36) au niveau de l'extrémité libre (14) **et/ou en ce qu'**un dispositif de limitation de pression est prévu, lequel limite la pression dans la conduite de gaz comprimé (16) à une pression maximale définie.

8. Installation de traitement de gaz comprimé (100) pour la mise à disposition de gaz comprimé traité à un système formant tuyau (10) selon l'une des revendications précédentes, dans laquelle l'installation de traitement de gaz comprimé (100) présente une entrée (104) pour le raccordement d'une source de gaz comprimé (106) et une sortie (108) pour la mise à disposition du gaz comprimé traité à une conduite de gaz comprimé (16), dans laquelle l'entrée (104) et la sortie (108) sont raccordées par écoulement entre elles et un dispositif d'humidification (120) est disposé dans le raccordement par écoulement (110) pour l'humidification du gaz comprimé, **caractérisée en ce que** l'installation de traitement de gaz comprimé (100) présente un dispositif chauffant (170) pour le chauffage d'un liquide, dans laquelle le dispositif chauffant (170) présente un raccordement de départ (172) permettant de délivrer en sortie du liquide chauffé à une section de départ (20) de la conduite de fluide (18) et un raccordement de retour (174) pour l'alimentation du liquide recyclé depuis une section de retour (22) de la conduite de fluide (18).

9. Installation de traitement de gaz comprimé (100) selon la revendication 8, **caractérisée en ce que** l'installation de traitement de gaz comprimé (100) présente un ou plusieurs réservoirs (134, 136) pour un fluide d'injection, dans laquelle le ou les réservoirs (134, 136) sont respectivement raccordés au dispositif d'humidification (120) au moyen d'une conduite d'injection (126', 126"), de sorte que le dispositif d'humidification (120) peut être alimenté en fluide d'injection.

10. Installation de traitement de gaz comprimé (100) selon la revendication 9, **caractérisée en ce que** l'installation de traitement de gaz comprimé (100) est configurée de telle sorte que, lorsqu'aucun gaz comprimé n'est prélevé à la sortie (108), l'apport de fluide d'injection au dispositif d'humidification (120) est arrêté **et/ou en ce que,** lorsque plusieurs réservoirs (134, 136) sont présents, des fluides d'injection différents sont respectivement contenus dans les réservoirs (134, 136).

11. Installation de traitement de gaz comprimé (100) selon la revendication 9 ou 10, **caractérisée en ce que** la conduite d'injection ou les conduites d'injection (126', 126") passent respectivement par un générateur de fréquence (146) pour l'excitation du fluide d'injection **et/ou en ce que** la conduite d'injection ou les conduites d'injection (126', 126") présentent respectivement une ou plusieurs buses d'injection au moyen desquelles les conduites d'injection (126', 126") débouchent respectivement dans le dispositif d'humidification (120), dans laquelle respectivement un dispositif de rinçage à contre-courant de buses est prévu sur les buses d'injection pour le nettoyage en particulier permanent de la buse d'injection.

12. Installation de traitement de gaz comprimé (100) selon la revendication 11, **caractérisée en ce que** le dispositif de rinçage à contre-courant de buses présente respectivement une conduite de rinçage à contre-courant (152, 154) pour le recyclage du fluide d'injection excédentaire vers le réservoir (134, 136) respectif pour le fluide d'injection.

13. Installation de traitement de gaz comprimé (100) selon l'une des revendications 9 à 12, **caractérisée en ce que** dans la ou les conduites d'injection (126', 126") est intégré respectivement un dispositif de mesure de débit (142, 144) pour la détection du débit du fluide d'injection respectif **et/ou en ce que** dans la ou les conduites d'injection (126', 126") est disposée respectivement une soupape (138, 140) au moyen de laquelle l'apport du fluide d'injection peut être réglé.

14. Installation de traitement de gaz comprimé (100) selon l'une des revendications 9 à 13, **caractérisée en ce qu'**un dispositif collecteur de condensat (158) est intégré dans le raccordement par écoulement (110), entre le dispositif d'humidification (120) et la sortie (108), **et/ou en ce que** le dispositif chauffant (170) présente une conduite de départ (176) raccordée par écoulement au raccordement de départ (172), dans laquelle un élément chauffant (178) est intégré dans la conduite de départ (176) pour le chauffage du liquide.

15. Installation de traitement de gaz comprimé (100) selon l'une des revendications 9 à 14, **caractérisée en ce que** le dispositif chauffant (170) présente une conduite de retour (182) raccordée par écoulement au raccordement de retour (174), dans laquelle un échangeur de chaleur (184) est intégré dans la conduite de retour (182) pour la réception d'énergie thermique du liquide guidé dans la conduite de retour (182).

16. Installation de traitement de gaz comprimé (100) selon les revendications 14 et 15, **caractérisée en ce que** l'échangeur de chaleur (184) et l'élément chauffant (178) sont raccordés thermiquement l'un à l'autre de telle sorte que l'énergie thermique reçue par l'échangeur de chaleur (184) peut être délivrée en sortie à l'élément chauffant (178) sur la conduite de départ (176).

17. Installation de traitement de gaz comprimé (100) selon l'une des revendications 14 à 16, **caractérisée en ce que** la conduite de départ (176) est raccordée par écoulement à une source de fluide (190) pour l'apport de liquide,
**en ce que** la conduite de retour (182) est raccordée par écoulement à un puits de fluide (192) pour l'éjection du liquide **et/ou en ce que** la conduite de départ (176) et la conduite de retour (182) sont raccordées par écoulement l'une à l'autre.

18. Installation de traitement de gaz comprimé (100) selon l'une des revendications 8 à 17, **caractérisée en ce qu'**une commande (112) est prévue pour l'installation de traitement de gaz comprimé (100) **et/ou en ce que** le raccordement de départ (172), le raccordement de retour (174) et la sortie (108) sont disposés à proximité les uns des autres dans une zone de raccordement (196).
